# EUROPEAN PATENT APPLICATION

(11) **EP 4 797 568 A1**
(43) Date of publication of application: **26.08.2026**
(21) Application number: 26157530.2
(22) Date of filing: 10.02.2026
(51) Int. Cl.: H04B 10/032, H04J 14/02

(54) **OPTICAL ARRAY FOR PROTECTING OPTICAL SYSTEMS**

(30) Priority: 19.02.2025 US 202519057868
(71) Applicant: Cisco Technology, Inc., San Jose, CA 95134-1706 (US)
(72) Inventor: ZHANG, Randy H., San Jose, 95134-1706 (US); DE CAMPOS MOURA, Emerson Luis, San Jose, 95134-1706 (US); GAZZOLA, Maurizio, San Jose, 95134-1706 (US)
(74) Representative: Noble, Nicholas

(57) **Abstract**

The present disclosure describes an optical array for protecting optical systems. An optical device includes a first optical source, a second optical source, a third optical source, a first switch, a second switch, and a third switch. When the first optical source fails to produce a first optical signal, the third switch directs a second optical signal produced by the third optical source to the first switch and the first switch outputs the second optical signal. When the second optical source fails to produce a third optical signal, the third switch directs the second optical signal produced by the third optical source to the second switch and the second switch outputs the second optical signal.

## Description

### TECHNICAL FIELD

Embodiments presented in this disclosure generally relate to optical systems. More specifically, embodiments disclosed herein relate to an optical array for protecting optical systems.

### BACKGROUND

An optical system may include optical sources (e.g., lasers) that generate source optical signals. The optical system may then modulate the source optical signal with data and output the resulting optical signal. When an optical source fails, however, the optical system may fail to operate and may fail to produce the optical signal.

### BRIEF DESCRIPTION OF THE DRAWINGS

So that the manner in which the above-recited features of the present disclosure can be understood in detail, a more particular description of the disclosure, briefly summarized above, may be had by reference to embodiments, some of which are illustrated in the appended drawings. It is to be noted, however, that the appended drawings illustrate typical embodiments and are therefore not to be considered limiting; other equally effective embodiments are contemplated.
Figure 1A illustrates an example optical system.
Figure 1B illustrates an example optical array in the system of Figure 1A.
Figure 2A illustrates an example optical device in the optical system of Figure 1.
Figure 2B illustrates an example optical device in the optical system of Figure 1.
Figure 2C illustrates an example optical device in the optical system of Figure 1.
Figure 2D illustrates an example optical device in the optical system of Figure 1.
Figure 3 is a flowchart of an example method performed by the optical system of Figure 1.

To facilitate understanding, identical reference numerals have been used, where possible, to designate identical elements that are common to the figures. It is contemplated that elements disclosed in one embodiment may be beneficially used in other embodiments without specific recitation.

### DESCRIPTION OF EXAMPLE EMBODIMENTS

### OVERVIEW

The present disclosure describes an optical array for protecting optical systems. According to an embodiment, an optical device includes a first optical source, a second optical source, a third optical source, a first switch, a second switch, and a third switch. When the first optical source fails to produce a first optical signal, the third switch directs a second optical signal produced by the third optical source to the first switch and the first switch outputs the second optical signal. When the second optical source fails to produce a third optical signal, the third switch directs the second optical signal produced by the third optical source to the second switch and the second switch outputs the second optical signal.

According to another embodiment, a method includes, when a first optical source fails to produce a first optical signal, directing, by a first switch, a second optical signal produced by a second optical source to a second switch and outputting, by the second switch, the second optical signal. The method also includes, when a third optical source fails to produce a third optical signal, directing, by the first switch, the second optical signal produced by the second optical source to a third switch and outputting, by the third switch, the second optical signal.

According to another embodiment, an optical device includes a first optical source, a second optical source, a third optical source, a first switch, a second switch, and a third switch. When the first optical source fails to produce a first optical signal and when the second optical source produces a second optical signal, the second switch directs the second optical signal from the second optical source to the first switch and the first switch outputs the second optical signal. When the first optical source fails to produce the first optical signal and when the second optical source fails to produce the second optical signal, the third switch directs the third optical signal from the third optical source to the first switch and the first switch outputs the third optical signal.

### EXAMPLE EMBODIMENTS

The present disclosure describes an optical system that includes an optical device that provides a backup optical signal when an optical source in the optical system fails. Generally, an optical array of the optical device includes a network of switches that connect to multiple optical sources and to multiple backup optical sources. The network may connect to a different number of optical sources than backup optical sources. When an optical source fails to produce an optical signal, the network of switches operates to direct a backup optical signal from one of the backup optical sources to the destination of the now absent optical signal. The optical system may then modulate the backup optical signal.

In certain embodiments, the optical system provides several technical advantages. For example, the optical system uses an optical array that allows a backup optical source to be switched in for multiple optical sources. In this manner, the optical system may include fewer backup optical sources than existing optical systems, which reduces the size of the optical system relative to existing optical systems.

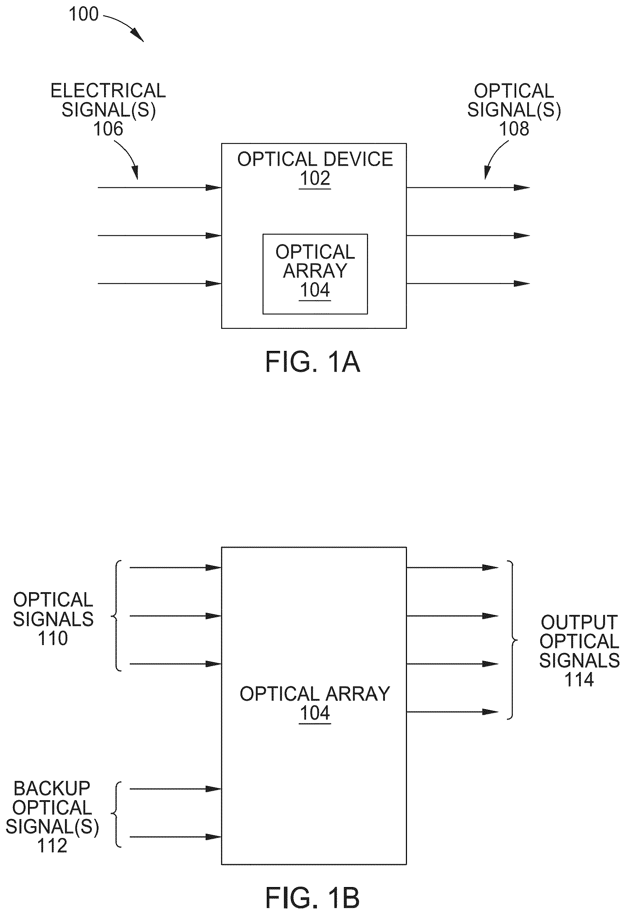

Figure 1A illustrates an example optical system 100. As seen in Figure 1A, the optical system 100 includes an optical device 102 that includes an optical array 104. Generally, the optical device 102 receives one or more electrical signals 106 and converts the electrical signals 106 into one or more optical signals 108. For example, the electrical signals 106 may carry data or information, and the optical device 102 may modulate source optical signals with the data or information to produce the optical signals 108. In this manner, the optical signals 108 carry the data or information provided by the electrical signals 106.

The optical device 102 may include optical sources (e.g., lasers) that produce the source optical signals for modulation. In some instances, an optical source may fail or may need to be serviced. As a result, the optical source may stop producing a source optical signal. The optical device 102 may detect (e.g., using a photodetector) when the optical source stops producing the source optical signal, and in response, the optical device 102 may provide a backup optical signal to replace the source optical signal using the optical array 104.

The optical array 104 includes a network of optical switches connected to the optical sources and to backup optical sources. The optical sources may produce source optical signals, and the backup optical sources may produce backup optical signals. The optical switches may operate to direct the source optical signals to modulators of the optical device 102. When an optical source fails, the optical switches may operate to direct a backup optical signal from a backup optical source to the modulator to which the failed optical source provided an optical signal. When the optical source returns to operation, the optical switches may operate to direct the optical signal from the optical source to the modulator. In this manner, the optical array 104 operates optical switches to supply backup optical signals when an optical source fails.

In certain embodiments, the system 100 and/or the optical device 102 includes a controller that manages the operation of the optical device 102. The controller may be positioned within the optical device 102 or external to the optical device 102. For example, the controller may include a processor and a memory that control the operation of the optical device 102. The processor may detect when an optical source in the optical device 102 fails (e.g., by monitoring the output of photodiodes), and the processor may operate the switches in the optical array 104 (e.g., by communicating control signals to the switches) to redirect backup optical signals when the optical source fails.

The processor is any electronic circuitry, including, but not limited to one or a combination of microprocessors, microcontrollers, application specific integrated circuits (ASIC), application specific instruction set processor (ASIP), and/or state machines, that communicatively couples to the memory and controls the operation of the optical device 102. The processor may be 8-bit, 16-bit, 32-bit, 64-bit or of any other suitable architecture. The processor may include an arithmetic logic unit (ALU) for performing arithmetic and logic operations, processor registers that supply operands to the ALU and store the results of ALU operations, and a control unit that fetches instructions from memory and executes them by directing the coordinated operations of the ALU, registers and other components. The processor may include other hardware that operates software to control and process information. The processor executes software stored on the memory to perform any of the functions described herein. The processor controls the operation and administration of the optical device 102 by processing information (e.g., information received from photodiodes, switches, and the memory). The processor is not limited to a single processing device and may encompass multiple processing devices contained in the same device or computer or distributed across multiple devices or computers. The processor is considered to perform a set of functions or actions if the multiple processing devices collectively perform the set of functions or actions, even if different processing devices perform different functions or actions in the set.

The memory may store, either permanently or temporarily, data, operational software, or other information for the processor. The memory may include any one or a combination of volatile or non-volatile local or remote devices suitable for storing information. For example, the memory may include random access memory (RAM), read only memory (ROM), magnetic storage devices, optical storage devices, or any other suitable information storage device or a combination of these devices. The software represents any suitable set of instructions, logic, or code embodied in a computer-readable storage medium. For example, the software may be embodied in the memory, a disk, a CD, or a flash drive. In particular embodiments, the software may include an application executable by the processor to perform one or more of the functions described herein. The memory is not limited to a single memory and may encompass multiple memories contained in the same device or computer or distributed across multiple devices or computers. The memory is considered to store a set of data, operational software, or information if the multiple memories collectively store the set of data, operational software, or information, even if different memories store different portions of the data, operational software, or information in the set.

Figure 1B illustrates an example optical array 104 in the system 100 of Figure 1A. As seen in Figure 1B, the optical array 104 receives multiple optical signals 110 (e.g., from optical sources in the optical device) and multiple backup optical signals 112 (e.g., from backup optical sources in the optical device). The optical array 104 includes a network of switches that direct the optical signals 110 towards the output of the optical array 104. The optical array 104 may then produce the output optical signals 114. As discussed above, when one of the optical sources fail to produce one or more of the optical signals 110, the switches in the optical array may switch in one or more of the backup optical signals 112 to replace one the absent optical signals 110. As a result, the output optical signals 114 may include one or more of the backup optical signals 112. In this manner, the optical array 104 replaces optical signals 110 with backup optical signals 112.

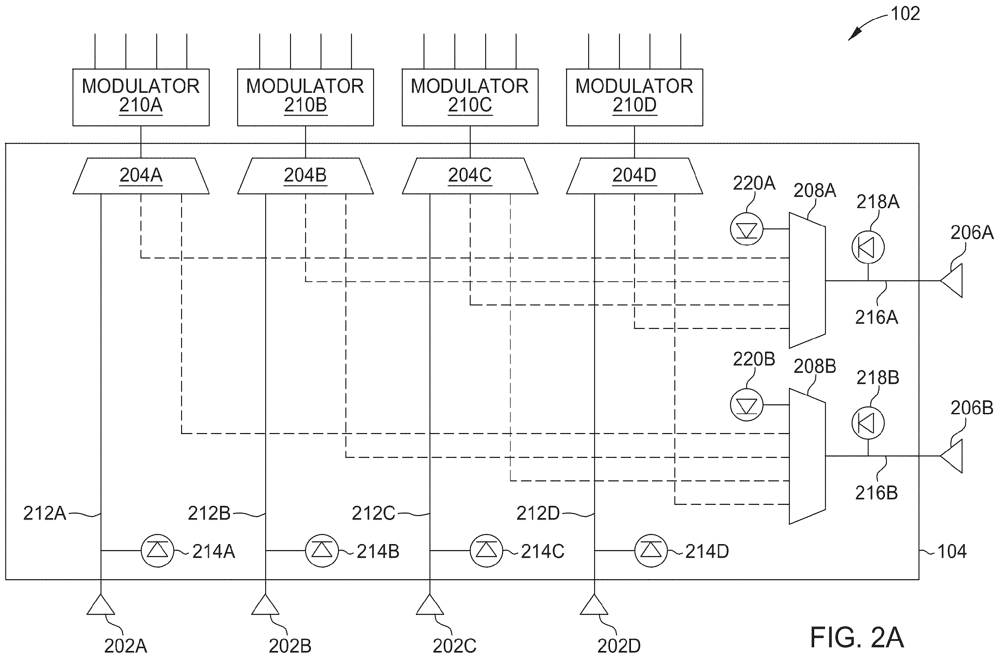

Figure 2A illustrates an example optical device 102 in the optical system 100 of Figure 1. As seen in Figure 2A, the optical device 102 may include one or more optical sources 202, the optical array 104, one or more backup optical sources 206, and one or more modulators 210. The optical array 104 includes one or more switches 204 and one or more switches 208. Generally, the switches 204 and 208 operate to direct optical signals from the optical sources 202 to the modulators 210. When an optical source 202 fails, the corresponding switch 204 and a switch 208 may operate to direct a backup optical signal from a backup optical source 206 to the corresponding modulator 210 for the failed optical source 202. In this manner, the optical device 102 provides backup optical signals for the optical sources 202.

In the example of Figure 2A, the optical device 102 includes the optical sources 202A, 202B, 202C, and 202D. As an example, the optical sources 202A, 202B, 202C, and 202D may be lasers. The optical sources 202A, 202B, 202C, and 202D may produce the optical signals 212A, 212B, 212C, and 212D, respectively. Although the optical device 102 is shown including four optical sources 202, the optical device 102 may include any number of optical sources 202.

The optical device 102 includes the switches 204A, 204B, 204C, and 204D. The switches 204A, 204B, 204C, and 204D may be optical switches with inputs connected to the optical sources 202A, 202B, 202C, and 202D. The optical source 202A directs the optical signal 212A to the switch 204A. The optical source 202B directs the optical signal 212B to the switch 204B. The optical source 202C directs the optical signal 212C to the switch 204C. The optical source 202D directs the optical signal 212D to the switch 204D. Although the optical device 102 is shown including four switches 204, the optical device 102 may include any number of switches 204. In some embodiments, the number of switches 204 may be equal to the number of optical sources 202.

The optical device 102 includes the backup optical sources 206A and 206B. As an example, the backup optical sources 206A and 206B may be lasers. The backup optical sources 206A and 206B may produce the backup optical signals 216A and 216B, respectively. Although the optical device 102 is shown including two backup optical sources 206, the optical device 102 may include any number of backup optical sources 206. In some embodiments, the optical device 102 includes fewer backup optical sources 206 than optical sources 202. Additionally, the backup optical sources 206 may be turned off or inactive when the optical sources 202 are functioning and when the backup optical sources 206 are not needed.

The optical device 102 includes the switches 208A and 208B. The switches 208A and 20B may be optical switches with inputs connected to the backup optical sources 206A and 206B. The backup optical source 206A directs the backup optical signal 216A to the switch 208A. The backup optical source 206B directs the backup optical signal 216B to the switch 208B.

The optical device 102 includes the modulators 210A, 210B, 210C, and 210D. Generally, the modulators 210A, 210B, 210C, and 210D modulate optical signals from the switches 204A, 204B, 204C, and 204D, respectively. The modulators 210A, 210B, 210C, and 210D then output one or more modulated optical signals. In this manner, the optical device 102 produces and communicates modulated optical signals.

As seen in Figure 2A, the optical device 102 includes photodiodes 214A, 214B, 214C, and 214D. The photodiode 214A receives the optical signal 212A produced by the optical source 202A. The photodiode 214B receives the optical signal 212B produced by the optical source 202B. The photodiode 214C receives the optical signal 212C produced by the optical source 202C. The photodiode 214D receives the optical signal 212D produced by the optical source 202D. The photodiodes 214A, 214B, 214C, and 214D may produce signals indicating whether the photodiodes 214A, 214B, 214C, and 214D detect the optical signals 212A, 212B, 212C, and 212D from the optical sources 202A, 202B, 202C, and 202D. When any of the optical sources 202A, 202B, 202C, and 202D fail, the respective photodiodes 214A, 214B, 214C, and 214D may indicate that the respective optical signals 212A, 212B, 212C, and 212D are not being received by the photodiodes 214A, 214B, 214C, and 214D and that the respective optical sources 202A, 202B, 202C, and 202D failed.

The optical device 102 also includes photodiodes 218A and 218B. The photodiode 218A receives the backup optical signal 216A produced by the backup optical source 206A. The photodiode 218B receives the backup optical signal 216B produced by the backup optical source 206B. The photodiodes 218A and 218 may produce signals indicating whether the photodiodes 218A and 218B detect the backup optical signals 216A and 216B from the backup optical sources 206A and 206B. When any of the backup optical sources 206A and 206B fail, the respective photodiodes 218A and 218B may indicate that the respective backup optical signals 216A and 216B are not being received by the photodiodes 218A and 218B and that the respective backup optical sources 206A and 206B failed.

The optical device 102 also includes photodiodes 220A and 220B. The photodiode 220A receives the backup optical signal 216A from the switch 208A. The photodiode 220B receives the backup optical signal 216B from the switch 208B. The photodiodes 220A and 220B may produce signals indicating whether the photodiodes 220A and 220B detect the backup optical signals 216A and 216B from the switches 208A and 208B. When any of the switches 208A and 208B fail, the respective photodiodes 220A and 220B may produce signals indicating that the respective backup optical signals 216A and 216B are not being received by the photodiodes 220A and 220B and that the respective switches 208A and 208B failed.

In the example of Figure 2A, each of the optical sources 202A, 202B, 202C, and 202D are functioning and producing the optical signals 212A, 212B, 212C, and 212D. Solid lines are used between the optical sources 202A, 202B, 202C, and 202D and the switches 204A, 204B, 204C, and 204D to indicate that the optical signals 212A, 212B, 212C, and 212D are being communicated from the optical sources 202A, 202B, 202C, and 202D to the switches 204A, 204B, 204C, and 204D. The switches 204A, 204B, 204C, and 204D may direct the optical signals 212A, 212B, 212C, and 212D to the modulators 210A, 210B, 210C, and 210D for modulation.

Because the optical sources 202A, 202B, 202C, and 202D have not failed, the switches 208A and 208B do not direct the backup optical signals 216A and 216B to any of the switches 204A, 204B, 204C, and 204D. Dashed lines are used between the switches 208A and 208B and the switches 204A, 204B, 204C, and 204D to indicate that the backup optical signals 216A and 216B are not being communicated to the switches 204A, 204B, 204C, and 204D.

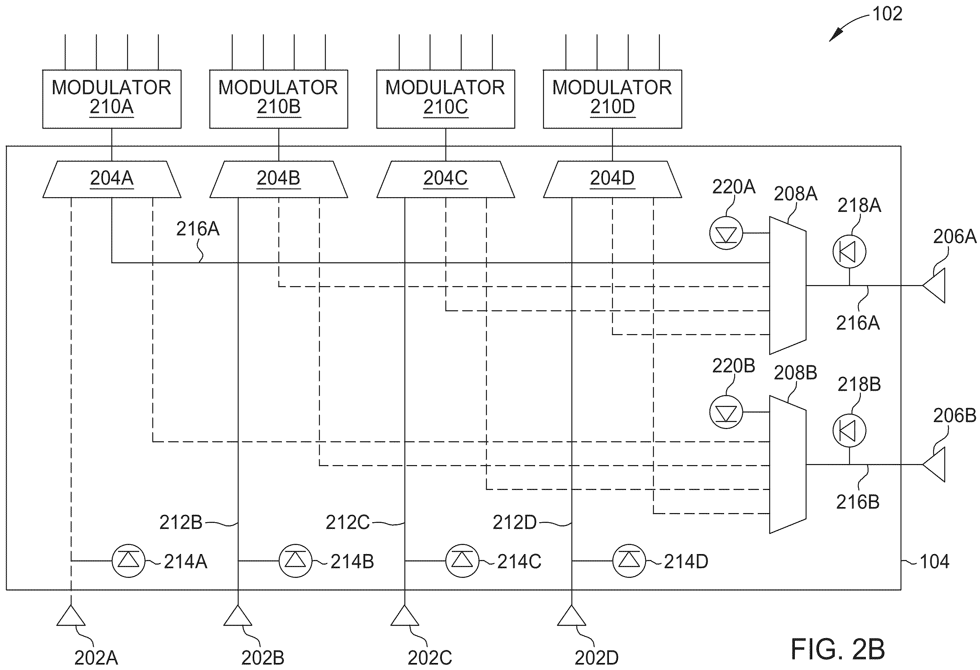

Figure 2B illustrates an example optical device 102 in the optical system 100 of Figure 1. Generally, Figure 2B shows the optical device 102 and the optical array 104 when the optical source 202A fails and stops producing an optical signal for the switch 204A. A dashed line is used between the optical source 202A and the switch 204A to indicate that an optical signal is not being communicated from the optical source 202A to the switch 204A.

Because the optical source 202A stops producing an optical signal, the photodiode 214A stops detecting an optical signal. As a result, the photodiode 214A indicates that the optical source 202A is not producing an optical signal (e.g., by producing a signal indicating that the photodiode 214A is not detecting an optical signal or by producing no signal, which indicates that the photodiode 214A is not detecting an optical signal). In response to the photodiode 214A not detecting an optical signal, the switch 204A, the switch 208A, and/or the switch 208B may operate to replace the optical signal from the failed optical source 202A.

In the example of Figure 2B, the switch 208A operates to direct the backup optical signal 216A from the backup optical source 206A to the switch 204A. The switch 204A then directs the backup optical signal 216A to the modulator 210A for modulation, effectively replacing the optical signal from the optical source 202A. A solid line is used between the switch 208A and the switch 204A to indicate that the backup optical signal 216A is being communicated from the switch 208A to the switch 204A. The switch 208A may continue directing the backup optical signal 216A to the switch 204A until the optical source 202A is repaired, replaced, or serviced and begins producing an optical signal.

In some embodiments, the switch 208A may direct the backup optical signal 216A to the switch 204A in response to the photodiode 218A and the photodiode 220A detecting the backup optical signal 216A, which may indicate that the backup optical source 206A and the switch 208A have not failed. If either of the backup optical source 206A or the switch 208A have failed, then another switch (e.g., the switch 208B) may operate to direct another backup signal (e.g., the backup optical signal 216B) to the switch 204A.

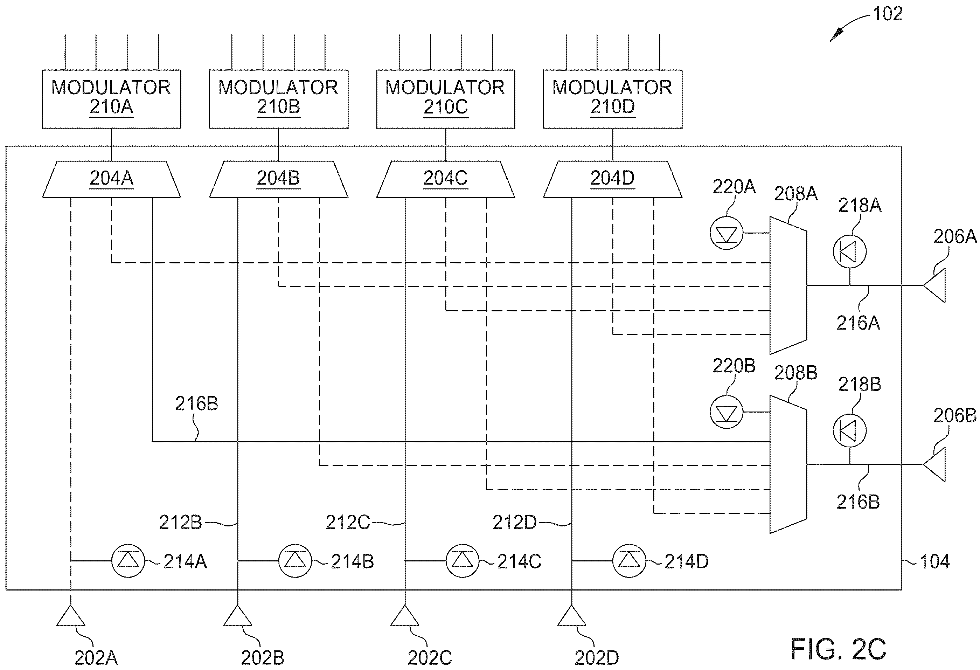

Figure 2C illustrates an example optical device 102 in the optical system 100 of Figure 1. Generally, Figure 2C shows the optical device 102 and the optical array 104 when the optical source 202A fails and stops producing an optical signal for the switch 204A. A dashed line is used between the optical source 202A and the switch 204A to indicate that an optical signal is not being communicated from the optical source 202A to the switch 204A.

Because the optical source 202A stops producing an optical signal, the photodiode 214A stops detecting an optical signal. As a result, the photodiode 214A indicates that the optical source 202A is not producing an optical signal (e.g., by producing a signal indicating that the photodiode 214A is not detecting an optical signal or by producing no signal, which indicates that the photodiode 214A is not detecting an optical signal). In response to the photodiode 214A not detecting an optical signal, the switch 204A, the switch 208A, and/or the switch 208B may operate to replace the optical signal from the failed optical source 202A.

In the example of Figure 2C, the switch 208B operates to direct the backup optical signal 216B from the backup optical source 206B to the switch 204A. The switch 204A then directs the backup optical signal 216B to the modulator 210A for modulation, effectively replacing the optical signal from the optical source 202A. A solid line is used between the switch 208B and the switch 204A to indicate that the backup optical signal 216B is being communicated from the switch 208B to the switch 204A. The switch 208B may continue directing the backup optical signal 216B to the switch 204A until the optical source 202A is repaired, replaced, or serviced and begins producing an optical signal.

In some embodiments, the switch 208B may direct the backup optical signal 216B to the switch 204A in response to the photodiode 218B and the photodiode 220B detecting the backup optical signal 216B, which may indicate that the backup optical source 206B and the switch 208B have not failed. If either of the backup optical source 206B or the switch 208B have failed, then another switch (e.g., the switch 208A) may operate to direct another backup signal (e.g., the backup optical signal 216A) to the switch 204A.

In some instances, the switch 208B may direct the backup optical signal 216B to the switch 204A in response to photodiodes (e.g., the photodiodes 218A and/or 220A) not detecting another backup optical signal (e.g., the backup optical signal 216A). As a result, the backup optical source 206B is selected as an alternative to another backup optical source.

As shown by the examples of Figures 2B and 2C, the optical device 102 may use any of the backup optical sources to provide a backup optical signal to replace the optical signal that was produced by a failed optical source. As a result, each of the backup optical sources may serve as backups for any of the optical sources in the optical device 102.

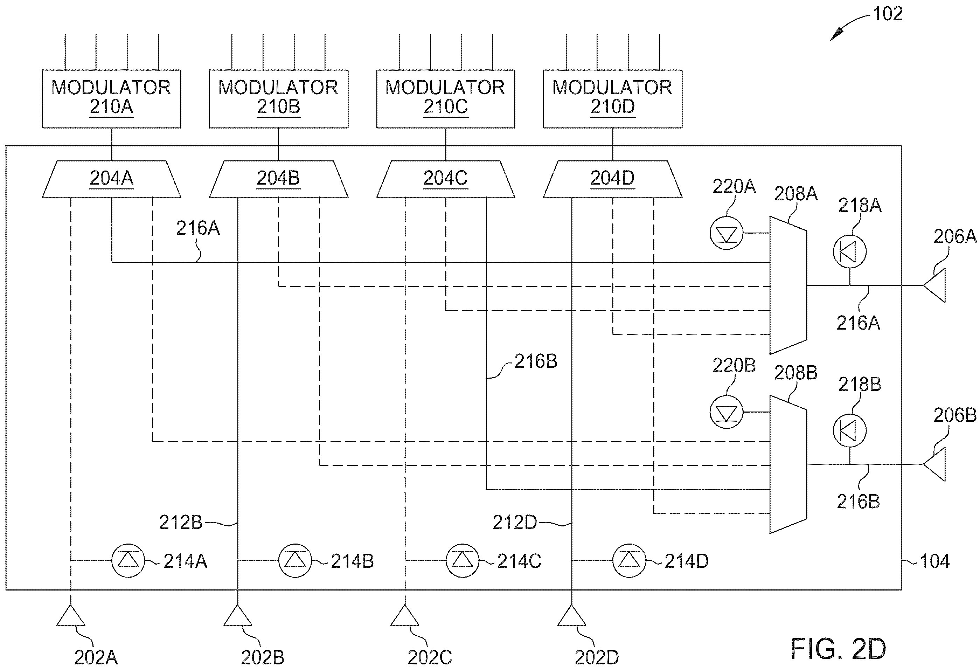

Figure 2D illustrates an example optical device 102 in the optical system 100 of Figure 1. Generally, Figure 2D shows the optical device 102 and the optical array 104 when the optical source 202A and the optical source 202C fail and stop producing optical signals for the switches 204A and 204C. Dashed lines are used between the optical source 202A and the switch 204A and between the optical source 202C and the switch 204C to indicate that optical signals are not being communicated from the optical source 202A to the switch 204A and from the optical source 202C to the switch 204C.

Because the optical sources 202A and 202C stop producing optical signals, the photodiodes 214A and 214C stop detecting optical signals. As a result, the photodiodes 214A and 214C indicate that the optical sources 202A and 202C are not producing optical signals (e.g., by producing signals indicating that the photodiodes 214A and 214C are not detecting optical signals or by producing no signals, which indicates that the photodiodes 214A and 214C are not detecting optical signals). In response to the photodiodes 214A and 214C not detecting optical signals, the switch 204A, the switch 208A, and/or the switch 208B may operate to replace the optical signals from the failed optical sources 202A and 202C.

In the example of Figure 2D, the switch 208A operates to direct the backup optical signal 216A from the backup optical source 206A to the switch 204A, and the switch 208B operates to direct the backup optical signal 216B from the backup optical source 206B to the switch 204C. The switch 204A then directs the backup optical signal 216A to the modulator 210A for modulation, effectively replacing the optical signal from the optical source 202A. The switch 204C directs the backup optical signal 216B to the modulator 210C for modulation, effectively replacing the optical signal from the optical source 202C. Solid lines are used between the switch 208A and the switch 204A and between the switch 208B and the switch 204C to indicate that the backup optical signals 216A and 216B are being communicated from the switches 208A and 208B to the switches 204A and 204C. The switches 208A and 208B may continue directing the backup optical signals 216A and 216B to the switches 204A and 204C until the optical sources 202A and 202A are repaired, replaced, or serviced and begin producing optical signals.

As shown by the example of Figure 2D, the optical device 102 may use multiple backup optical sources to provide backup optical signals to replace the optical signals that were produced by multiple failed optical sources. As a result, the optical device 102 may protect against multiple failed optical sources simultaneously or contemporaneously.

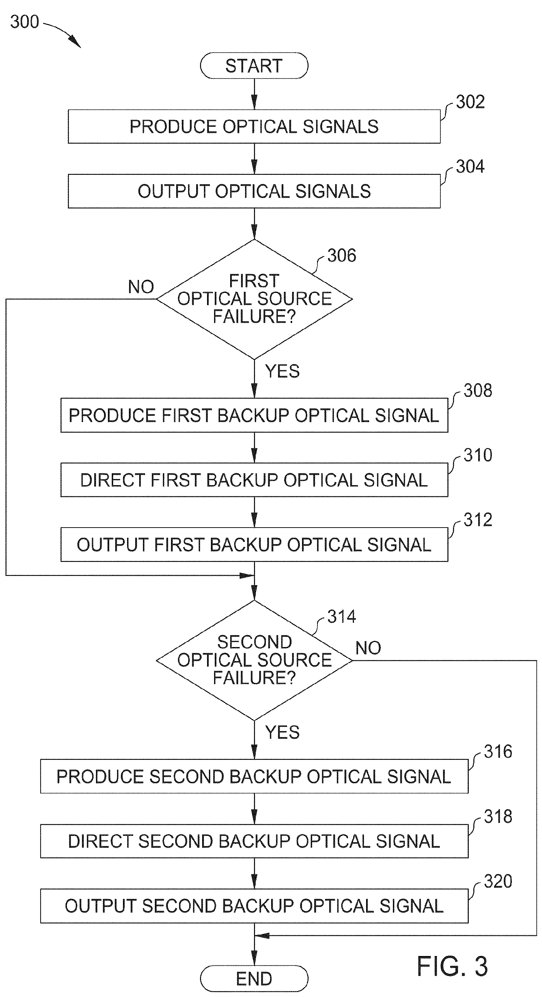

Figure 3 is a flowchart of an example method 300 performed by the optical system 100 of Figure 1. In particular embodiments, an optical device (e.g., the optical device 102 shown in Figure 1) performs the method 300. By performing the method 300, the optical device operates switches of an optical array to provide backup optical signals when optical sources fail.

At 302, the optical device produces optical signals. For example, the optical device may include multiple optical sources (e.g., lasers) that produce source optical signals. At 304, the optical device outputs optical signals. For example, the optical device may direct the source optical signals to switches that then direct the source optical signals to modulators. The modulators modulate the source optical signals with data or information to produce the output optical signals.

At 306, the optical device determines whether a first optical source has failed. For example, the optical device may include a photodiode that detects whether the first optical source is producing a source optical signal. When the photodiode detects that the first optical source is not producing the source optical signal (or producing a weakened version of the source optical signal), the optical device may determine that the first optical source has failed. If the optical device determines that the first optical source has not failed, the optical device may proceed to 314.

If the optical device determines that the first optical source has failed, the optical device produces a first backup optical signal at 308. The optical device may include a first backup optical source (e.g., laser) that produces the first backup optical signal. At 310, the optical device directs the first backup optical signal to a first switch that is optically connected to the first optical source. For example, the optical device may include a second switch that is optically connected to the first backup optical source and to the first switch. The optical device may operate the second switch (e.g., using control signals) such that the second switch directs the first backup optical signal to the first switch. At 312, the optical device outputs the first backup optical signal. For example, the optical device may operate the first switch (e.g., using control signals) such that the first switch outputs the first backup optical signal (e.g., to a modulator).

At 314, the optical device determines whether a second optical source has failed. For example, the optical device may include a photodiode that detects whether the second optical source is producing a source optical signal. When the photodiode detects that the second optical source is not producing the source optical signal (or producing a weakened version of the source optical signal), the optical device may determine that the second optical source has failed. If the optical device determines that the second optical source has not failed, the optical device may conclude the method 300.

If the optical device determines that the second optical source has failed, the optical device produces a second backup optical signal at 316. The optical device may include a second backup optical source (e.g., laser) that produces the second backup optical signal. At 318, the optical device directs the second backup optical signal to a third switch that is optically connected to the second optical source. For example, the optical device may include a fourth switch that is optically connected to the second backup optical source and to the third switch. The optical device may operate the fourth switch (e.g., using control signals) such that the fourth switch directs the second backup optical signal to the third switch. At 320, the optical device outputs the second backup optical signal. For example, the optical device may operate the third switch (e.g., using control signals) such that the third switch outputs the second backup optical signal (e.g., to a modulator).

In summary, the optical system 100 includes an optical device 102 that provides a backup optical signal when an optical source in the optical system 100 fails. Generally, an optical array of the optical device 102 includes a network of switches that connect to multiple optical sources and to multiple backup optical sources. The network may connect to a different number of optical sources than backup optical sources. When an optical source fails to produce an optical signal, the network of switches operates to direct a backup optical signal from one of the backup optical sources to the destination of the now absent optical signal. The optical system may then modulate the backup optical signal.

In the current disclosure, reference is made to various embodiments. However, the scope of the present disclosure is not limited to specific described embodiments. Instead, any combination of the described features and elements, whether related to different embodiments or not, is contemplated to implement and practice contemplated embodiments. Additionally, when elements of the embodiments are described in the form of "at least one of A and B," or "at least one of A or B," it will be understood that embodiments including element A exclusively, including element B exclusively, and including element A and B are each contemplated. Furthermore, although some embodiments disclosed herein may achieve advantages over other possible solutions or over the prior art, whether or not a particular advantage is achieved by a given embodiment is not limiting of the scope of the present disclosure. Thus, the aspects, features, embodiments and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, the embodiments disclosed herein may be embodied as a system, method or computer program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a computer program product embodied in one or more computer readable medium(s) having computer readable program code embodied thereon.

Program code embodied on a computer readable medium may be transmitted using any appropriate medium, including but not limited to wireless, wireline, optical fiber cable, RF, etc., or any suitable combination of the foregoing.

Computer program code for carrying out operations for embodiments of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to embodiments presented in this disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various embodiments. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In view of the foregoing, the scope of the present disclosure is determined by the claims that follow.

## Claims

1. An optical device comprising:
a first optical source;
a second optical source;
a third optical source;
a first switch;
a second switch; and
a third switch, wherein when the first optical source fails to produce a first optical signal:
the third switch directs a second optical signal produced by the third optical source to the first switch; and
the first switch outputs the second optical signal; and
wherein when the second optical source fails to produce a third optical signal:
the third switch directs the second optical signal produced by the third optical source to the second switch; and
the second switch outputs the second optical signal.

2. The optical device of Claim 1, wherein when the first optical source produces the first optical signal, the first switch outputs the first optical signal.

3. The optical device of any preceding Claim, further comprising a photodiode optically coupled to the first optical source, wherein the photodiode is arranged to indicate whether the first optical source fails to produce the first optical signal.

4. The optical device of any preceding Claim, further comprising a photodiode optically coupled to the third optical source, wherein the photodiode is arranged to indicate whether the third optical source fails to produce the second optical signal.

5. The optical device of any preceding Claim, further comprising a photodiode optically coupled to the third switch, wherein the photodiode is arranged to indicate whether the third switch is failing.

6. The optical device of any preceding Claim, further comprising a modulator optically connected to the first switch, wherein the modulator is arranged to modulate an output of the first switch.

7. The optical device of any preceding Claim, further comprising:
a fourth optical source; and
a fourth switch, wherein (i) when the first optical source fails to produce the first optical signal and (ii) when the third switch is failing:
the fourth switch directs a fourth optical signal produced by the fourth optical source to the first switch; and
the first switch outputs the fourth optical signal.

8. A method comprising:
when a first optical source fails to produce a first optical signal:
directing, by a first switch, a second optical signal produced by a second optical source to a second switch; and
outputting, by the second switch, the second optical signal; and
when a third optical source fails to produce a third optical signal:
directing, by the first switch, the second optical signal produced by the second optical source to a third switch; and
outputting, by the third switch, the second optical signal.

9. The method of Claim 8, further comprising, when the first optical source produces the first optical signal, outputting, by the second switch, the first optical signal.

10. The method of Claim 8 or 9, further comprising indicating, by a photodiode optically coupled to the first optical source, whether the first optical source fails to produce the first optical signal.

11. The method of any of Claims 8 to 10, further comprising indicating, by a photodiode optically coupled to the second optical source, whether the second optical source fails to produce the second optical signal.

12. The method of any of Claims 8 to 11, further comprising indicating, by a photodiode optically coupled to the first switch, whether the first switch is failing.

13. The method of any of Claims 8 to 12, further comprising modulating, by a modulator optically connected to the second switch, an output of the second switch.

14. The method of any of Claims 8 to 13, further comprising:
a fourth optical source; and
a fourth switch, wherein (i) when the first optical source fails to produce the first optical signal and (ii) when the first switch is failing:
the fourth switch directs a fourth optical signal produced by the fourth optical source to the second switch; and
the second switch outputs the fourth optical signal.

15. An optical device comprising:
a first optical source;
a second optical source;
a third optical source;
a first switch;
a second switch; and
a third switch, wherein when the first optical source fails to produce a first optical signal and when the second optical source produces a second optical signal:
the second switch directs the second optical signal from the second optical source to the first switch; and
the first switch outputs the second optical signal; and
when the first optical source fails to produce the first optical signal and when the second optical source fails to produce the second optical signal:
the third switch directs a third optical signal from the third optical source to the first switch; and
the first switch outputs the third optical signal,
optionally wherein any one or more of:
A) when the first optical source produces the first optical signal, the first switch outputs the first optical signal;
B) the device further comprises a photodiode optically coupled to the first optical source, wherein the photodiode is arranged to indicate whether the first optical source fails to produce the first optical signal;
C) the device further comprises a photodiode optically coupled to the second optical source, wherein the photodiode is arranged to indicate whether the second optical source fails to produce the second optical signal;
D) the device further comprises a photodiode optically coupled to the second switch, wherein the photodiode is arranged to indicate whether the second switch is failing;
E) the device further comprises a modulator optically connected to the first switch, wherein the modulator is arranged to modulate an output of the first switch.
